Europäisches Patentamt

European Patent Office

Office européen des brevets

(11) Veröffentlichungsnummer: **0 215 499**
**A2**

(12) # EUROPÄISCHE PATENTANMELDUNG

(21) Anmeldenummer: 86201354.7

(51) Int. Cl.⁴: **G01K 7/20**

(22) Anmeldetag: 01.08.86

(30) Priorität: 16.08.85 DE 3529245

(43) Veröffentlichungstag der Anmeldung:
25.03.87 Patentblatt 87/13

(84) Benannte Vertragsstaaten:
DE FR GB

(71) Anmelder: **Philips Patentverwaltung GmbH**
**Billstrasse 80**
**D-2000 Hamburg 28(DE) DEFRGB**
Anmelder: **N.V. Philips' Gloeilampenfabrieken**
**Groenewoudseweg 1**
**NL-5621 BA Eindhoven(NL) FRGB**

(72) Erfinder: **Heck, Bernd**
**Carsten-Reimers-Ring 35**
**D-2000 Hamburg 71(DE)**
Erfinder: **Schröder, Dierk, Dr.**
**Vossstrasse 30a**
**D-2000 Hamburg 65(DE)**

(74) Vertreter: **Auer, Horst, Dipl.-Ing. et al**
**Philips Patentverwaltung GmbH Billstrasse**
**80 Postfach 10 51 49**
**D-2000 Hamburg 28(DE)**

(54) **Harmonischer Messoszillator zur Temperaturerfassung.**

(57) Der harmonische Meßoszillator zur Temperaturerfassung weist ein Allpaßfilter (1) auf, das eine Stromquelle (16) mit steuerbarem Verstärkungsfaktor und ein Regelglied (17) ansteuert, das mit dem Steuereingang der Stromquelle (16) verbunden ist und das dessen Verstärkungsfaktor derart steuert, daß die Amplitude der vom Meßoszillator erzeugten Wechselspannung einen konstanten Wert annimmt. Das Allpaßfilter (1) enthält eine phasenbestimmende, zweipolige Schaltungsanordnung (10) mit einem Spannungsfolger (12), dessen Eingang mit einem Pol (9) der Schaltungsanordnung (10) und dessen Ausgang über einen ohm'schen Eingangswiderstand (13) mit dem invertierenden Eingang eines ersten Operationsverstärkers (14) verbunden sind, der über einen Meßwiderstand (15) mit temperaturabhängigem ohm'schen Widerstandswert gegengekoppelt ist und dessen Ausgang über einen ohm'schen Widerstand (41) mit dem einen Pol (9) und dessen nicht-invertierender Eingang mit dem anderen Pol (11) der zweipoligen Schaltungsanordnung (10) verbunden sind. Hierbei ergeben kleine vom Meßwiderstand (15) erfaßte Temperaturänderungen relativ große, gut meßbare Änderungen der Frequenz des Meßoszillators.

FIG.1

## Harmonischer Meßoszillator zur Temperaturerfassung

Die Erfindung bezieht sich auf einen harmonischen Meßoszillator zur Temperaturerfassung, der ein Signal mit temperaturabhängiger Frequenz erzeugt und der einen über ein Allpaßfilter mitgekoppelten Verstärker enthält, wobei das Allpaßfilter ein zweipoliges phasenbestimmendes Schaltungsglied mit temperaturabhängigem ohm'schen Widerstandswert enthält, das die zu messende Frequenz des Oszillatorsignals temperaturabhängig verändert.

Aus der Zeitschrift etz -b, Band 25 von 1973, Heft 9, Seite 220-222, ist ein harmonischer Meßoszillator eingangs beschriebener Art mit einem Allpaßfilter bekannt, das als phasenbestimmendes ohm'sches Widerstandselement ein Platin-Widerstandsthermometer enthält. Bei Temperaturen zwischen 0°C und 100°C ergeben sich hierbei Oszillatorfrequenzen zwischen 800 Hz und 1 KHz. Diese relativ geringe Frequenzänderung von 20 % bei einer Temperaturänderung von 100° K bewirkt, daß kleine Temperaturänderungen nur ungenau erfaßbar sind und daß die sich hierbei ergebenden geringen Frequenzänderungen ein Frequenzmeßgerät mit hoher Auflösung erfordern.

Aufgabe der vorliegenden Erfindung ist es, die Empfindlichkeit des harmonischen Meßoszillators soweit zu vergrößern, daß auch kleine Temperaturänderungen relativ große, gut meßbare Änderungen der Oszillatorfrequenz ergeben.

Diese Aufgabe wird einem harmonischen Meßoszillator eingangs genannter Art dadurch gelöst, daß das zweipolige Schaltungsglied als zweipolige Schaltungsanordnung ausge bildet ist, die mit einem Meßwiderstand mit temperaturabhängigem ohm'schen Widerstandswert verbunden ist und deren vom Allpaßfilter erfaßbarer ohm'scher Widerstand sich stärker als der Widerstand des Meßwiderstandes mit der Temperatur ändert.

In einer Ausgestaltung des Meßoszillators enthält die zweipolige Schaltungsanordnung einen Spannungsfolger, dessen Eingang mit dem einen Pol der Schaltungsanordnung und dessen Ausgang über einen ohm'schen Eingangswiderstand mit dem invertierenden Eingang eines ersten Operationsverstärkers verbunden ist, der über den Meßwiderstand gegengekoppelt ist und dessen Ausgang über einen ohm'schen Widerstand mit dem einen Pol und dessen nicht-invertierender Eingang mit dem anderen Pol der zweipoligen Schaltungsanordnung verbunden sind. Einetemperaturabhängige Änderung des Widerstandswertes des in den Gegenkopplungskreis eines Operationsverstärkers geschalteten Meßwiderstandes bewirkt hierbei eine große Änderung des ohm'schen Widerstandswertes der zweipoligen Schaltungsanordnung und damit eine relativ große Änderung der Schwingfrequenz des harmonischen Meßoszilators.

Ein einfach ausgebildetes und billig herstellbares Allpaßfilter erster Ordnung ergibt sich, wenn Eingang und Ausgang des Allpaßfilters über einen ohm'schen Spannungsteiler miteinander verbunden sind, dessen Mittelabgriff an den invertierenden Eingang eines zweiten Operationsverstärkers angeschlossen ist, der ausgangsseitig mit dem Ausgang des Allpaßfilters und dessen nicht-invertierender Eingang einerseits über einen Kondensator mit dem Eingang des Allpaßfilters und andererseits mit dem einen Pol der zweipoligen Schaltungsanordnung verbunden ist, deren anderer Pol an Masse angeschlossen ist.

In einer vorteilhaften Ausgestaltung des harmonischen Meßoszillators ist der Ausgang des Spannungsfolgers mit dem Eingang eines nicht-invertierenden Verstärkers verbunden, der ausgangsseitig an den einen Pol der zweipoligen Schaltungsanordnung angeschlossen ist. Hierdurch wird dem über einen temperaturabhängigen Widerstand gegengekoppelten ersten Operationsverstärker ein nicht-invertierender Verstärker parallelgeschaltet, der den ohm'schen Widerstand der zweipoligen Schaltungsanordnung erhöht, so daß sich dadurch die Schwingfrequenz des harmonischen Meßoszillators über den Verstärkungsfaktor des nicht-invertierenden Verstärkers um einen konstanten Betrag verringern läßt.

In Ausgestaltung der Erfindung weist die zweipolige Schaltungsanordnung einen Umschalter auf, welcher die dem ersten Operationsverstärker abgewandte Klemme des ohm'schen Eingangswiderstandes in der einen Stellung mit dem Ausgang des Spannungsfolgers und in der anderen Stellung mit einem Ausgang des nicht-invertierenden Verstärkers verbindet. Durch Betätigung des Umschalters ist der nicht-invertierende Verstärker in Reihe mit dem über den temperaturabhängigen Widerstand gegengekoppelten ersten Operationsverstärker schaltbar. Dadurch vergrößert sich die Eingangsspannung des ersten Operationsverstärkers, so daß dessen Verstärkungsfaktor und damit auch dessen Phasenfehler verringert werden können.

Einige Ausführungsbeispiele der Erfindung werden im folgenden anhand der Zeichnungen beschrieben. Es zeigen

Fig. 1 ein Schaltbild des harmonischen Meßoszillators,

Fig. 2 ein Schaltbild einer Ausführungsform des zweipoligen Schaltungsgliedes.

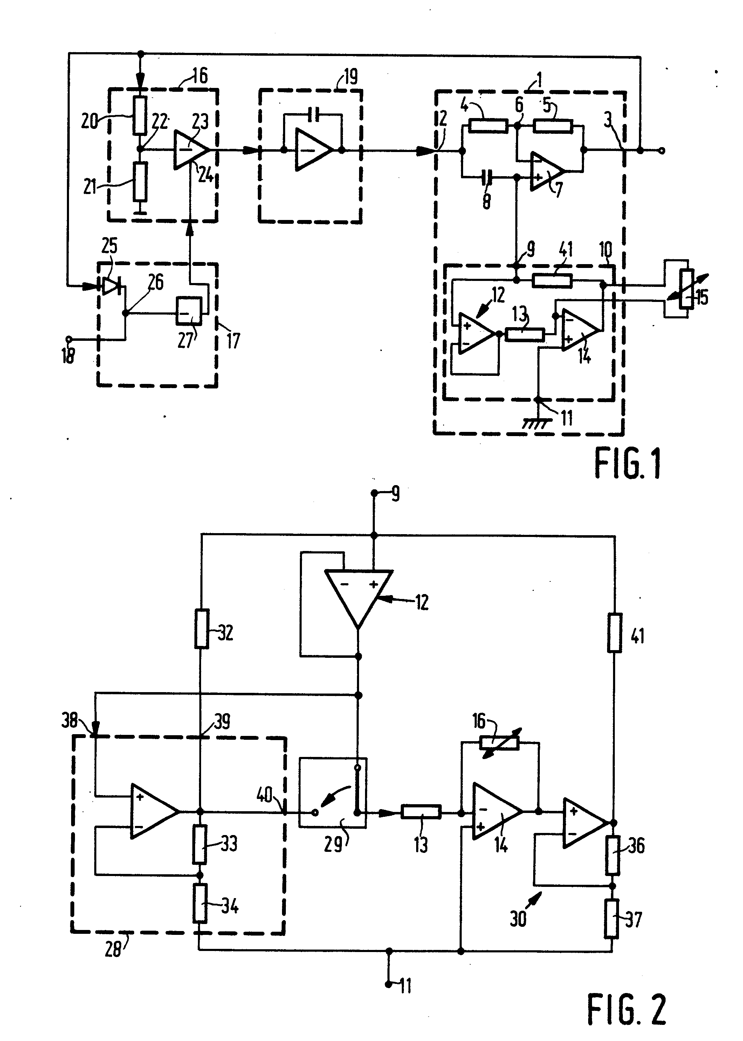

Der in Fig. 1 dargestellte harmonische Meßoszillator enthält ein Allpaßfilter erster Ordnung 1, dessen Eingang 2 und Ausgang 3 über einen ohm'schen Spannungsteiler 4,5 miteinander verbunden sind. Der Mittelabgriff 6 des ohm'schen Spannungsteilers 4,5 ist mit dem invertierenden Eingang eines zweiten Operationsverstärkers 7 verbunden, der ausgangsseitig mit dem Ausgang 3 des Allpaßfilters 1 verbunden ist. Der nicht-invertierende Eingang des zweiten Operationsverstärkers 7 ist über einen Kondensator 8 mit dem Eingang 2 des Allpaßfilters 1 und außerdem mit einem Pol 9 eines zweipoligen Schaltungsgliedes verbunden, dessen anderer Pol 11 auf Masse liegt. Das Schaltungsglied besteht aus einer zweipoligen Schaltungsanordnung 10, die mit einem Meßwiderstand 15 verbunden ist.

Die Schaltungsanordnung 10 enthält einen Spannungsfolger 12, der beispielsweise als Operationsverstärker ausgebildet sein kann, dessen invertierender Eingang und dessen Ausgang miteinander verbunden sind und dessen nicht-invertierender Eingang an den einen Pol 9 der zweipoligen Schaltungsanordnung 10 angeschlossen ist. Der Ausgang des Spannungsfolgers 12 ist über einen ohm'schen Eingangswiderstand 13 mit dem invertierenden Eingang eines ersten Operationsverstärkers 14 verbunden, der über den Meßwiderstands 15 mit temperaturabhängigem Widerstandswert gegengekoppelt ist. Der Meßwiderstand 15 kann beispielsweise ein Pt 100-Widerstandsthermometer sein. Der Operationsverstärker 14 kann aber auch über einen Meßwiderstand 15 gegengekoppelt sein, dessen ohm'scher Widerstandswert von einer anderen physikalischen Meßgröße, beispielsweise von einem Magnetfeld abhängt. Der Ausgang des Operationsverstärkers 14 ist über einen ohm'schen Widerstand 41 an den einen Pol 9 und der nicht-invertierende Eingang des Operationsverstärkers 14 ist über den anderen Pol 11 der zweipoligen Schaltungsanordnung 10 an Masse angeschlossen.

Der Ausgang 3 des Allpaßfilters 1 ist einerseits mit einer Stromquelle 16 und andererseits mit einem Regelglied 17 verbunden, das eine Eingangsklemme 18 zur Eingabe eines Amplitudensollwertes aufweist und das ausgangsseitig mit dem Steuereingang der Stromquelle 16 zur Steuerung des von der Stromquelle gelieferten Stromes verbunden ist.

Die Stromquelle 16 ist über einen 90°-Phasenschieber 19 mit dem Eingang 2 des Allpaßfilters 1 verbunden. Der 90°-Phasenschieber 19 ist beispielsweise als kapazitiv gegengekoppelter, invertierender Operationsverstärker ausgebildet. Die Stromquelle 16 kann beispielsweise aus einem ohm'schen Spannungsteiler 20,21 bestehen, der mit dem Ausgang 3 des Allpaßfilters 1 verbunden ist und dessen Mittelabgriff 22 an den invertierenden Eingang eines dritten Operationsverstärkers 23 mit Stromausgang angeschlossen ist, der einen Steuereingang 24 zum Einstellen des Verstärkungsfaktors und damit der Größe des gelieferten Stromes aufweist.

Das Regelglied 17 enthält einen mit dem Ausgang 3 des Allpaßfilters 1 verbundenen Gleichrichter 25, der gemeinsam mit einer Eingangsklemme 18 zur Eingabe des Amplitudensollwertes an einen Summationspunkt 26 angeschlossen ist. Der Summationspunkt 26 ist mit dem invertierenden Eingang einer Glättungseinrichtung 27 verbunden, die den negativen, linearen Mittelwert der über den Summationspunkt 26 gelieferten Wechselspannung ermittelt und über den Steuereingang 24 dem dritten Operationsverstärker 23 zuführt. Die Glättungseinrichtung 27 kann beispielsweise als Integrierglied mit invertierendem Eingang ausgebildet sein.

Der harmonische Meßoszillator besteht im wesentlichen aus einem Verstärker 16, der über ein Allpaßfilter 1 mitgekoppelt ist und dadurch mit einer von den Widerstandswerten des phasenbestimmenden Kondensators 8 und des phasenbestimmenden Schaltungsgliedes 10, 15 abhängigen Frequenz schwingt. Die Amplitude der vom harmonischen Meßoszillator gelieferten Wechselspannung wird vom Regelglied 17 derart geregelt, daß sie einen konstanten Wert annimmt. Hierzu wird die vom Allpaßfilter 1 gelieferte Wechselspannung im Gleichrichter 25 gleichgerichtet. Zu der vom Gleichrichter 25 erzeugten welligen Gleichspannung wird im Summationspunkt 26 die über die Eingangsklemmen 18 eingegebene und dem Amplitudensollwert entsprechende Gleichspannung mit negativer Polarität addiert. Die Glättungseinrichtung 27 mit invertierendem Eingang erzeugt aus der sich dadurch ergebenden Wechselspannung eine negative bzw. positive Gleichspannung, die dem Steuereingang 24 des dritten Operationsverstärkers 23 zugeführt wird und die dessen Verstärkungsfaktor verkleinert bzw. vergrößert, wenn die Amplitude der vom Allpaßfilter 1 gelieferten Wechselspannung größer bzw. kleiner als der vorgebbare Amplitudensollwert ist.

Der in der zweipoligen Schaltungsanordnung 10 enthaltene erste Operationsverstärker 14 erzeugt aus der am nicht-invertierenden Eingang des zweiten Operationsverstärkers 7 und damit einerseits an der einen Klemme des Widerstandes 41 und andererseits über den Spannungsfolger 12 auch am invertierenden Eingang des ersten Operationsverstärkers 14 anliegenden Wechselspannung eine dazu gegenphasige Wechselspannung, die an der anderen Klemme des Widerstandes 41 anliegt.

Von der Differenz der an den beiden Klemmen des Widerstandes 41 anliegenden Spannungen unterschiedlicher Polarität ist der durch den Widerstand 41 fließende Strom und damit der gesamte in die Schaltungsanordnung 10 einfließende Strom abhängig. Je größer die zu erfassende Temperatur und damit der Widerstandswert des Widerstandselementes 15, der Verstärkungsfaktor des ersten Operationsverstärkers 14 und die vom ersten Operationsverstärker 14 erzeugte und am Widerstand 41 anliegende Wechselspannung ist, umso größer ist der in die Schaltungsanordnung 10 einfließende Strom.

Eine Zunahme dieses Stromes ist aber gleichbedeutend mit einer Abnahme des ohm'schen Widerstandes der Schaltungsanordnung 10. Die Frequenz der vom harmonischen Meßoszillator erzeugten Wechselspannung ist umgekehrt proportional zum ohm'schen Widerstand des Schaltungsgliedes 10, 15 und damit proportional zu der vom Meßwiderstand 15 erfaßten Temperatur. Hierbei kann die Frequenz der Wechselspannung auch von einer anderen physikalischen Größe abhängen, wenn sich die Widerstandswerte des Kondensators 8 oder des Meßwiderstandes 15 mit dieser physikalischen Größe verändern.

Die in Fig. 2 dargestellte Ausgestaltung des zweipoligen Schaltungsgliedes 10, 15 enthält neben dem Spannungsfolger 12, dem ersten Operationsverstärker 14 mit dem ohm'schen Eingangswiderstand 13 und dem Meßwiderstand 15 mit temperaturabhängigem, ohm'schen Widerstandswert im Gegenkopplungskreis und dem Widerstand 41 einen nicht-invertierenden Verstärker 28, dessen Eingang 38 mit dem Ausgang des Spannungsfolgers 12 und dessen Ausgang 39 über einen Widerstand 32 mit dem Eingang des Spannungsfolgers 12 verbunden sind. Weiterhin enthält das in Fig. 2 dargestellte Schaltungsglied einen Umschalter 29, welcher die dem Operationsverstärker 14 abgewandte Anschlußklemme des ohm'schen Eingangswiderstandes 13 in der einen, in Fig. 2 eingezeichneten Stellung mit dem Ausgang des Spannungsfolgers 12 und in der anderen, durch einen Pfeil angedeuteten Stellung mit einem weiteren Ausgang 40 des nicht-invertierenden Verstärkers 28 verbindet. Außerdem ist zwischen dem ersten Operationsverstärker 14 und dem Widerstand 41 ein weiterer nicht-invertierender Verstärker 30 geschaltet.

Da der nicht-invertierende Verstärker 28 als Spannungsfolger wirkt, kann auf den Spannungsfolger 12 verzichtet werden, wenn der Ausgang 40 des Verstärkers 28 mit dem Eingangswiderstand 13 elektrisch verbunden bleibt.

Der Verstärker 28 verstärkt die vom Spannungsfolger 12 gelieferte und am Eingang 38 anliegende Wechselspannung gleichphasig und führt sie über den Ausgang 39 dem einen Anschluß des Widerstandes 32 zu, an dessen anderem Anschluß die über den Pol 9 gelieferte Wechselspannung anliegt. Der durch den Widerstand 32 fließende Strom hängt von der Differenz der an den beiden Anschlüssen anliegenden Wechselspannung ab und ist gegenphasig zu dem durch den Widerstand 41 fließenden Strom. Dadurch wird der gesamte in das zweipolige Schaltungsglied nach Fig. 2 einfließende Strom reduziert. Das ist gleichbedeutend mit einer Vergrößerung des ohm'schen Widerstandes des zweipoligen Schaltungsgliedes, wodurch die Schwingfrequenz des harmonischen Meßoszillators um einen konstanten Betrag reduziert wird. Die Verstärkungsfaktoren der nicht-invertierenden Verstärker 28 und 30 lassen sich über eine entsprechende Dimensionierung der Widerstände 33, 34, 36 und 37 und die Ströme durch Veränderung der Widerstände 32 und 41 einstellen, so daß sich dadurch der ohm'sche Widerstand des zweipoligen Schaltungsgliedes nach Fig. 2 und damit auch die Frequenz der vom harmonischen Meßoszillator erzeugten Wechselspannung einstellen läßt.

Wird mit Hilfe des Umschalters 29 der ohm'sche Eingangswiderstand 13 vom Ausgang des Spannungsfolgers 12 getrennt und mit dem Ausgang 40 des nicht-invertierenden Verstärkers 28 verbunden, wird der erste Operationsverstärker 14 nicht mehr vom Spannungsfolger 12, sondern vom nicht-invertierenden Verstärker 28 gespeist, so daß dadurch Meßfehler aufgrund einer Phasenverschiebung zwischen vermieden werden. Mit Hilfe des Umschalters 29 läßt sich außerdem die vom Meßoszillator erzeugte Frequenz umschalten, da die vom Spannungsfolger 12 gelieferte Spannung je nach Stellung des Schalters 29 entweder von zwei oder von drei Verstärkern verstärkt wird, so daß dadurch die am Widerstand 41 anliegende Spannung, der durch den Widerstand 41 fließende Strom, der ohm'sche Widerstand des gesamten in Fig. 2 dargestellten Schaltungsgliedes und damit die Frequenz des harmonischen Meßoszillators umschaltbar ist.

## Ansprüche

1. Harmonischer Meßoszillator zur Temperaturerfassung, der ein Signal mit temperaturabhängiger Frequenz erzeugt und der einen über ein Allpaßfilter (1) mitgekoppelten Verstärker (16) enthält, wobei das Allpaßfilter (1) ein zweipoliges phasenbestimmendes Schaltungsglied mit temperaturabhängigem ohm'schen Widerstandswert enthält, das die zu messende Frequenz des Oszillatorsignals temperaturabhängig verändert, dadurch gekennzeichnet, daß das zweipolige Schaltungsglied als zweipolige Schaltungsanordnung (10) ausgebildet ist, die mit einem Meßwiderstand (15) mit temperaturabhängigem ohm'schen Widerstandswert verbunden ist und deren vom Allpaßfilter (1) erfaßbarer ohm'scher Widerstand sich stärker als der Widerstand des Meßwiderstandes (15) mit der Temperatur ändert.

2. Meßoszillator nach Anspruch 1, dadurch gekennzeichnet, daß die zweipolige Schaltungsanordnung (10) einen Spannungsfolger (12) enthält, dessen Eingang mit dem einen Pol (9) der Schaltungsanordnung (10) und dessen Ausgang über einen ohm'schen Eingangswiderstand (13) mit dem invertierenden Eingang eines ersten Operationsverstärkers (14) verbunden ist, der über den Meßwiderstand (15) gegengekoppelt ist und dessen Ausgang über einen ohm'schen Widerstand (41) mit dem einen Pol (9) und dessen nicht-invertierender Eingang mit dem anderen Pol (11) der zweipoligen Schaltungsanordnung (10) verbunden sind.

3. Meßoszillator nach Anspruch 2, dadurch gekennzeichnet, daß der Eingang (2) und der Ausgang (3) des Allpaßfilters (1) über einen ohm'schen Spannungsteiler (4,5) miteinander verbunden sind, dessen Mittelabgriff (6) an den invertierenden Eingang eines zweiten Operationsverstärkers (7) angeschlossen ist, der ausgangsseitig mit dem Ausgang (3) des Allpaßfilters und dessen nicht-invertierender Eingang einerseits über einen Kondensator (8) mit dem Eingang (2) des Allpaßfilters und andererseits mit dem einen Pol (9) der zweipoligen Schaltungsanordnung (10) verbunden ist, deren anderer Pol (11) an Masse angeschlossen ist.

4. Meßoszillator nach Anspruch 3, dadurch gekennzeichnet, daß der Ausgang des Spannungsfolgers (12) mit dem Eingang (38) eines nicht-invertierenden Verstärkers (28) verbunden ist, der ausgangsseitig über einen Widerstand (32) an den einen Pol (9) der zweipoligen Schaltungsanordnung (10) angeschlossen ist.

5. Meßoszillator nach Anspruch 4, dadurch gekennzeichnet, daß die zweipolige Schaltungsanordnung (10) einen Umschalter (29) aufweist, welcher die dem ersten Operationsverstärker (14) abgewandte Klemme des ohm'schen Eingangswiderstandes (13) in der einen Stellung mit dem Ausgang des Spannungsfolgers (12) und in der anderen Stellung mit einem Ausgang (40) des nicht-invertierenden Verstärkers (28) verbindet.

FIG.1

FIG. 2